# EUROPEAN PATENT APPLICATION

(11) **EP 1 885 122 A2**
(43) Date of publication of application: **06.02.2008**
(21) Application number: 07110980.5
(22) Date of filing: 25.06.2007
(51) Int. Cl.: H04N 5/445

(54) **Video processing apparatus and information display method thereof**

(30) Priority: 02.08.2006 KR 20060073039
(71) Applicant: SAMSUNG ELECTRONICS CO., LTD., Suwon-si, Gyeonggi-do 442-742 (KR)
(72) Inventor: Park, Ae-ran, Gyeonggi-do (KR)
(74) Representative: Davies, Robert Ean

(57) **Abstract**

A video processing apparatus (1) includes a display part (10), a Ul generating part (20) that generates UI images corresponding to a plurality of pieces of auxiliary information including category information, a video processing part (30) that processes a video signal and displays a video on the display part, and a controller (50) that extracts the category information from the plurality of pieces of auxiliary information, and if the extracted category corresponds to a preset category, controls the UI generating part and the video processing part to display a video including the Ul image corresponding to the auxiliary information of the corresponding category among the generated Ul images on the display part.

## Description

The present invention relates to a video processing apparatus and an information display method thereof, and more particularly, but not exclusively, to a video processing apparatus which is capable of setting a method of displaying an application in a digital broadcasting, and an information display method thereof.

A video processing apparatus receives a video signal from a broadcasting station and displays a viewable video. Recently in digital broadcasting, a video processing apparatus such as a digital TV provides a viewer with various additional information as well as video signals, and the viewer can select and use desired additional information through an application. For example, while watching a sports broadcast, the viewer can execute either an application to get additional information on players and significant scenes of the game, or a game program related to the sports broadcasting.

Applications that the digital broadcasting provides the user are getting more diverse in kind and increased in size. Accordingly, conventional video processing apparatuses had a function of informing a viewer of the presence of an application corresponding to a channel or a category of the application through a UI (user interface) image.

However, such conventional video processing apparatuses require a series of processes including determining whether or not an application is executed, and selecting a desired category and a desired application in order to allow the user to execute the desired application, which is inconvenient to the user.

Accordingly, it is an aim of embodiments of the present invention to provide a video processing apparatus which is capable of allowing a user to select an application simply by extracting category information of the application and displaying a UI image corresponding to an application of a preset category, and an information display method thereof.

According to an aspect of the invention there is provided a video processing apparatus comprising: a UI generating part that generates UI images corresponding to a plurality of pieces of auxiliary information including a category; a video processing part which processes a video signal and displays a video on the display part; and a controller which controls the UI generating part and the video processing part to display a video including the UI image corresponding to auxiliary information of a selected category selected by a user among the generated UI images on a display part if at least one of a plurality of categories is selected.

Preferably, the video processing apparatus further comprises the display part.

Preferably, the video processing apparatus further comprises a user input part, wherein the controller receives one of the auxiliary information of the corresponding category from the user input part and controls the video processing part to process the received auxiliary information and display the processed auxiliary information on the display part.

Preferably, the UI generating part further generates UI images corresponding to a first display mode in which the UI images corresponding to the plurality of pieces of auxiliary information are displayed and a second display mode in which the UI image corresponding to the auxiliary information of the corresponding category is displayed, and wherein the controller receives one of the display modes from the user input part and controls the user input part, the UI generating part and the video processing part to display the UI images corresponding to the auxiliary information on the display part according to the received display mode.

Preferably, the UI generating part further generates a UI image corresponding to a third display mode in which the UI image corresponding to the auxiliary information corresponding to the most frequent category selected by a user among the plurality of pieces of auxiliary information, is displayed.

Preferably, the controller receives a selection of one of display and hide of the UI images corresponding to the auxiliary information and the display modes from the user input part and controls the user input part and the video processing part to display or hide the UI image corresponding to the auxiliary information and the display modes according to the received selection.

Preferably, when a signal is inputted from the user input part to the controller in one of the second display mode and the third display mode, the controller controls the user input part and the UI generating part to generate a UI image corresponding to a list of channels including auxiliary information corresponding to a category set in one of the second display mode and the third display mode and display the generated UI image on the display part.

According to another aspect of the invention, there is provided an information display method of a video processing apparatus, comprising: receiving a plurality of pieces of auxiliary information including category information; generating UI images corresponding to the plurality of pieces of auxiliary information; extracting the category information from the plurality of pieces of auxiliary information; determining whether the extracted category corresponds to a preset category; and if it is determined that the extracted category corresponds to the preset category, displaying a video including the UI image corresponding to auxiliary information of the corresponding category.

Preferably, the information display method further comprises receiving one of the plurality of pieces of auxiliary information through the UI image corresponding to the auxiliary information of the corresponding category, wherein the received auxiliary information is processed and the UI image corresponding to the received auxiliary information is displayed.

Preferably, the generating the UI images comprises further generating UI images corresponding to a first display mode in which the UI images corresponding to the plurality of pieces of auxiliary information are displayed and a second display mode in which a UI image corresponding to the auxiliary information of the corresponding category is displayed, and wherein the displaying the video including the UI image corresponding to the auxiliary information of the corresponding category comprises receiving one of the display modes through the UI images corresponding to the display modes and displaying the UI images corresponding to the auxiliary information according to the received one of the display modes.

Preferably, the generating the UI images comprises further generating a UI image corresponding to a third display mode in which the UI image corresponding to auxiliary information corresponding to the most frequent category selected by a user among the plurality of pieces of auxiliary information, is displayed.

Preferably, the displaying the video including the UI image corresponding to the auxiliary information of the corresponding category comprises checking whether the display mode in which the UI images are displayed is one of the second display mode and the third display mode, the information display method further comprising: if it is checked that the display mode is one of the second display mode and the third display mode, generating and displaying a UI image corresponding to a list of channels including auxiliary information corresponding to the category set in one of the second display mode and the third display mode.
For a better understanding of the invention, and to show how embodiments of the same may be carried into effect, reference will now be made, by way of example, to the accompanying diagrammatic drawings in which:
FIG. 1 is a block diagram of a video processing apparatus according to an exemplary embodiment of the present invention;
FIGS. 2A and 2B are views showing a user interface of the video processing apparatus according to an exemplary embodiment of the present invention; and
FIG. 3 is a flow chart illustrating an information display method of the video processing apparatus according to an exemplary embodiment of the present invention.

Reference will now be made in detail to embodiments of the present invention, examples of which are illustrated in the accompanying drawings.

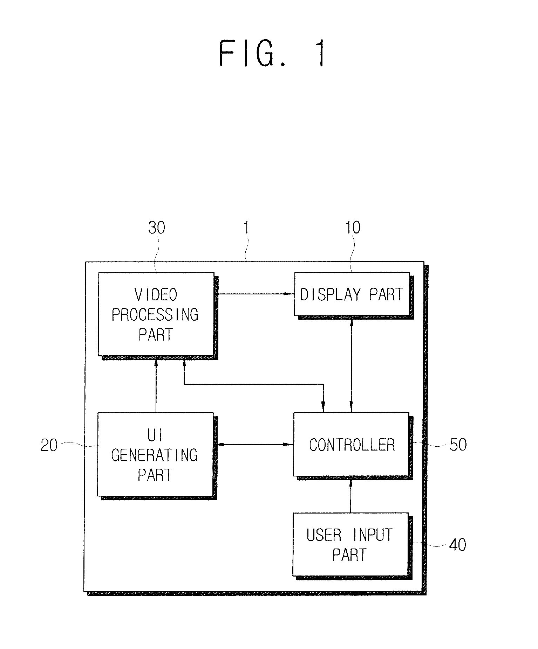

FIG. 1 is a block diagram of a video processing apparatus according to an embodiment of the present invention.

As shown in FIG. 1, a video processing apparatus 1 according to an embodiment of the present invention comprises a display part 10, a UI generating part 20, a video processing part 30, a user input part 40 and a controller 50. In this exemplary embodiment, the video processing apparatus 1 may include, for example, a set-top box that receives a digital broadcasting signal, or a digital TV to which a set-top box is attached.

The display part 10 displays a video based on a video signal processed by the video processing part 30 and may be embodied by a CRT (cathode ray tube), an LCD (liquid crystal display), a PDP (plasma display panel), a DLP (digital light processing), a SED (surface-conduction electron-emitter display), a FED (field emission display), etc.

The UI generating part 20 generates UI images corresponding to a plurality of auxiliary information received from a receiving part (not shown) of the video processing apparatus 1. Here, the auxiliary information may include an application to be executed in the video processing apparatus 1. In addition, the UI generating part 20 generates UI images corresponding to display modes in which the UI images corresponding to the plurality of auxiliary information are displayed. Here, the display modes may include a first display mode in which all of the UI images corresponding to the plurality of auxiliary information are displayed, a second display mode in which a UI image corresponding to auxiliary information of a preset category among the various auxiliary information is displayed, and a third display mode in which a UI image corresponding to auxiliary information of the most frequent category selected by a user among the plurality of auxiliary information is displayed.

The video processing part 30 processes the video signal to display a video on the display part 10. The video processing part 30 receives the UI images generated by the UI generating part 10 and generates a video including the UI images to be displayed on the display part 10 under control of the controller 50.

In addition, the video processing part 30 may perform a decoding process for extracting video information from the inputted video signal, a scaling process for adjusting resolution of the decoded video according to characteristics of the display part 10 and setting of the user, a picture enhancement process for improving video quality, etc.

The user input part 40 receives one of the plurality of auxiliary information through the UI images generated by the UI generating part 20 under control of the controller 50. In addition, the user input part 40 may receive one of the display modes in which the UI images corresponding to the plurality of auxiliary information are displayed under control of the controller 50. It is to be understood that the user input part 40 has channel input keys for selection of channels.

The controller 50 controls the UI generating part 20 and the video processing part 30 so that UI images corresponding to auxiliary information of the preset category among the various auxiliary information is displayed on the display part 10.

First, the controller 50 extracts category information from the various auxiliary information. Then, the controller 50 determines whether or not the extracted category corresponds to the preset category, and, if it is determined that the extracted category corresponds to the preset category, controls the UI generating part 20 to transmit only the UI image corresponding to auxiliary information of the corresponding category among the UI images generated by the UI generating part 20 to the video processing part 30. Then, the controller 50 controls the video processing part 30 to generate a video including the UI image corresponding to the extracted category which is determined to correspond to the preset category and display the generated video on the display part 10.

If there exists no auxiliary information of the category corresponding to the preset category, no UI image is displayed on the display part 10, thereby preventing a portion of a screen from being covered by the UI image corresponding to auxiliary information of a category not desired by the user.

When the UI images corresponding to the auxiliary information are displayed on the display part 10 and one of the displayed UI images is selected through the user input part 40, the controller 50 controls the user input part 40 and the video processing part 30 to process the auxiliary information corresponding to the selected UI image and display the processed auxiliary information on the display part 10. Thus, the user may select and execute an application according to auxiliary information in a digital broadcasting easily without performing a complicated process of determining whether or not an application is executed, and selecting a desired category and a desired application through a basic UI provided by the video processing apparatus 1.

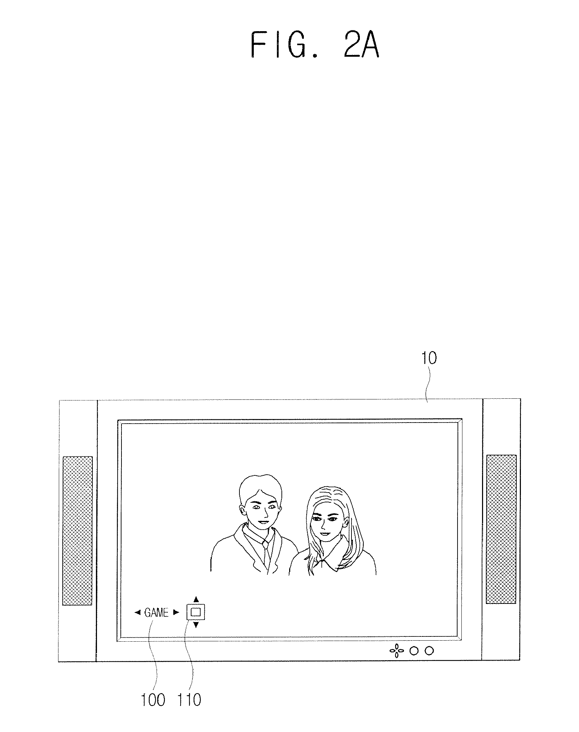

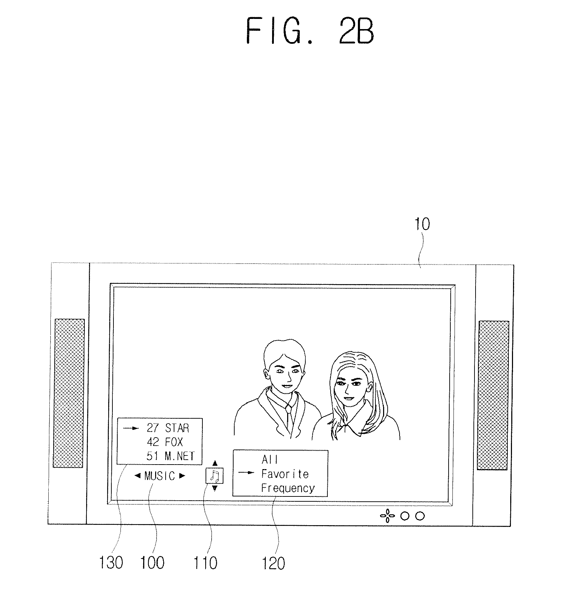

Hereinafter, the UI of the video processing apparatus 1 will be described with reference to FIGs. 2A and 2B.

As shown in FIG. 2A, the UI displayed on the display part 10 of the video processing apparatus 1 comprises a UI image 100 corresponding to the category of auxiliary information and a UI image 110 corresponding to auxiliary information of the preset category.

The UI image 100 corresponding to the category of the auxiliary information indicates the category of the auxiliary information if a currently selected channel includes auxiliary information. Here, if there exists a plurality of categories, a user may select one of the plurality of categories by means of keys provided in the user input part 40, for example, left/right keys. When a category is selected, the controller 50 determines whether or not a category extracted from the plurality of auxiliary information corresponds to the selected category, and controls the UI generating part 20 and the video processing part 30 to display the UI image 110 corresponding to the corresponding category on the display part 10.

Then, when the UI image 110 corresponding to the extracted category is displayed on the display part 10, the user may select the other UI image 110 by means of keys provided in the user input part 40, for example, up/down keys.

As shown in FIG. 2B, the UI may further include a UI image 120 corresponding to a display mode in which the UI image corresponding to the auxiliary information is selectively displayed (by choosing the category), and a UI image 130 corresponding to a list of channels that have the auxiliary information corresponding to the preset category. The display mode may include an 'All Mode' menu corresponding to the first display mode, a 'Favorite Mode' menu corresponding to the second display mode, and a 'Frequency Mode' menu corresponding to the third display mode.

The 'All Mode' menu is a menu for displaying both the UI image 100 corresponding to the all categories of the auxiliary information and the UI image 110 corresponding to the category auxiliary information if a currently selected channel includes the auxiliary information.

The 'Favorite Mode' menu is a menu for displaying only the UI image 110 corresponding to the auxiliary information of the category preset by the user if the currently selected channel includes the auxiliary information. The user may execute a desired application without difficulty through the 'Favorite Mode' menu by presetting a most favorite category.

In addition, the 'Frequency Mode' menu is a display menu for displaying only the UI image 110 corresponding to the auxiliary information of the most frequently selected category by the user.

When one of the plurality of auxiliary information is selected by means of the user input part 40, the controller 50 stores the category corresponding to the selected auxiliary information in a storing part (not shown). In addition, when the user selects his favorite category by means of a key provided in the user input part 40, the controller 50 stores the selected category in the storing part.

Then, when the user selects the 'Favorite Mode' menu, the controller 50 extracts his favorite category information from the storing part, and controls the storing part, the user input part 40 and the video processing part 30 to display the UI image 100 corresponding to the extracted category (favorite category) and the UI image 110 corresponding to the auxiliary information of the corresponding (favorite) category.

Likewise, when the user selects the 'Frequency Mode' menu, the controller 50 extracts the most frequently selected category information by the user from the storing part, and controls the storing part, the user input part 40 and the video processing part 30 to display the UI image 100 corresponding to the extracted category (most frequently used) and the UI image 110 corresponding to the auxiliary information of the corresponding category (most frequently used).

In addition, the controller 50 may receive a selection of display/hide of the UI images corresponding to the auxiliary information and the display modes from the user input part 40. For example, when a signal to hide the UI image is inputted from the user input part 40 to the controller 50 in a state where the U I image is displayed on the display part 10, the controller 50 may control the user input part 40, the UI generating part 20 and the video processing part 30 to display a video that does not include any UI image which is generated by the UI generating part 20 according to the auxiliary information and the display mode. Thus, the user may watch an original video with no UI.

Similarly, when a signal to display the UI image is inputted from the user input part 40 to the controller 50 in a state where the UI image is not displayed on the display part 10, the controller 50 may control the user input part 40, the UI generating part 20 and the video processing part 30 to display a video that includes the UI image which is generated by the UI generating part 20 according to the auxiliary information and the display mode.

When a signal is inputted from the user input part 40 to the controller 50 in a state with the 'Favorite Mode' or the 'Frequency Mode' in which the UI image 110 corresponding to the auxiliary information is displayed, the controller 50 controls the UI generating part 20 to further generate the UI image 130 corresponding to a list of channels in which the auxiliary information corresponding to the category set in the 'Favorite Mode' or the 'Frequency Mode' is included. Then, the controller 50 controls the video processing part 30 to display the generated UI image 130 corresponding to the list of channels on the display part 10. Thus, when the UI image 130 corresponding to the list of channels is displayed on the display part 10, the user may select a channel corresponding to desired auxiliary information by means of a channel selection key provided in the user input part 40.

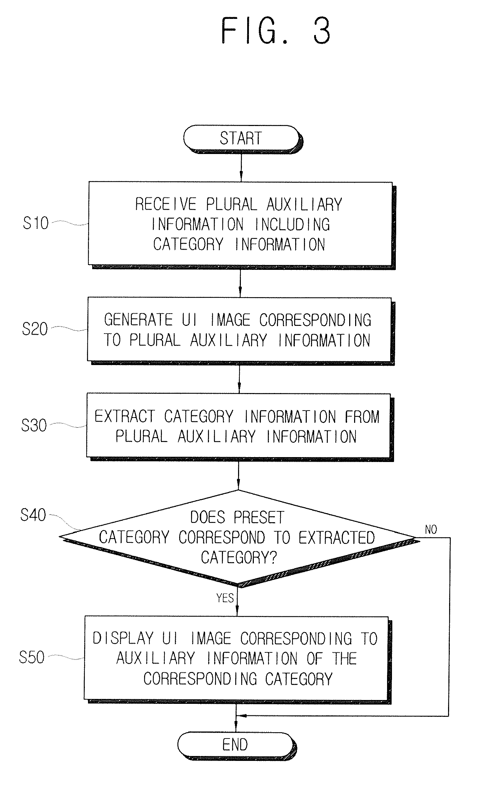

Hereinafter, a control method of the video processing apparatus 1 according to an exemplary embodiment of the present invention will be described with reference to FIG. 3.

First, the controller 50 controls a receiving part (not shown) provided in the video processing apparatus 1 to receive a plurality of auxiliary information including category information at operation S10. When the plurality of auxiliary information is received at the operation S10, the controller 50 controls the UI generating part 20 to generate UI images corresponding to the received plurality of auxiliary information at operation S20. Then, the controller 50 extracts the category information from the plurality of auxiliary information at operation S30. Next, the controller 50 determines whether or not the extracted category corresponds to a preset category at operation S40. If it is determined that the extracted category corresponds to the preset category, the controller 50 controls the UI generating part 20 and the video processing part 30 to display a video including a UI image corresponding to auxiliary information of the corresponding category at operation S50.

In the operation S50, the controller 50 may receive one of the plurality of auxiliary information from the user through the UI image corresponding to the auxiliary information of the corresponding category and, based on the received auxiliary information, may control the user input part 40 and the video processing part 30 to process and display auxiliary information corresponding to the selected UI image.

In addition, in the operation S50, the controller 50 may receive one of the display modes from the user through the UI images corresponding to the display modes in which the UI images are selectively displayed and, based on the received display mode, may control the user input part 40, the UI generating part and the video processing part 30 to process and display a UI image corresponding to auxiliary information.

Furthermore, in the operation S50, the controller 50 may check whether the display mode, in which the UI image is displayed selectively, is the second display mode or the third display mode and, if it is checked that the display mode is the second display mode or the third display mode, may control the UI generating part 20 to generate a UI image 130 corresponding to a list of channels having auxiliary information corresponding to the category according to the second or third display mode and the video processing part 30 to display the generated UI image on the display part 10.

As apparent from the above description, embodiments of the present invention provide a video processing apparatus and an information display method thereof, which are capable of allowing a user to select an application simply by extracting category information of the application and displaying a UI corresponding to an application to meet a preset category and allowing the user to simply select a channel including a desired application.

Although a few embodiments of the present invention have been shown and described, it will be appreciated by those skilled in the art that changes may be made in these embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A video processing apparatus comprising:
a user interface (UI) generating part (20)operable to generate UI images corresponding to a plurality of pieces of auxiliary information including a category;
a video processing part (30) operable to process a video signal and display a video on a display part; and
a controller (50) operable to control the UI generating part and the video processing part to display a video including the UI image corresponding to auxiliary information of a selected category selected by a user among the generated UI images on a display part if at least one of a plurality of categories is selected.

2. The video processing apparatus according to claim 1, further comprising the display part (10).

3. The video processing apparatus according to claim 1 or 2, further comprising a user input part (40),
wherein the controller (50) is operable to receive one of the auxiliary information of the corresponding category from the user input part and to control the video processing part to process the received auxiliary information and display the processed auxiliary information on the display part.

4. The video processing apparatus according to claim 3, wherein the UI generating part (20) is further operable to generate UI images corresponding to a first display mode in which the UI images corresponding to the plurality of pieces of auxiliary information are displayed and a second display mode in which the UI image corresponding to the auxiliary information of the corresponding category is displayed, and
wherein the controller is operable to receive one of a plurality of display modes from the user input part and to control the user input part, the UI generating part and the video processing part to display the UI images corresponding to the auxiliary information on the display part according to the received display mode.

5. The video processing apparatus according to claim 4, wherein the UI generating part is further operable to generate a UI image corresponding to a third display mode in which the UI image corresponding to auxiliary information corresponding to the most frequent category selected by a user among the plurality of pieces of auxiliary information, is displayed.

6. The video processing apparatus according to claim 4 or claim 5,
wherein the controller (50) is operable to receive a selection of one of display and hide of the UI images corresponding to the auxiliary information and the display modes from the user input part and controls the user input part and the video processing part to display or hide the UI image corresponding to the auxiliary information and the display modes according to the received selection.

7. The video processing apparatus according to claim 6, wherein, when a signal is inputted from the user input part (40) to the controller (50) in one of the second display mode and the third display mode, the controller is operable to control the user input part and the UI generating part to generate a UI image corresponding to a list of channels including auxiliary information corresponding to a category set in one of the second display mode and the third display mode and to display the generated UI image corresponding to the list of channels, on the display part.

8. The video processing apparatus according to any of claims 3 - 7, wherein the controller (50) is operable to receive a selection of one of display and hide of the UI images corresponding to the auxiliary information and display modes from the user input part (40) and to control the user input part (40) and the video processing part (30) to display or hide the UI image corresponding to the auxiliary information and the display modes, according to the received selection.

9. The video processing apparatus according to any of claims 5 - 8, wherein, when a signal is inputted from the user input part (40) to the controller (50) in one of a second display mode and a third display mode, the controller (50) is operable to control the user input part (40) and the UI generating part (20) to generate a UI image corresponding to a list of channels including auxiliary information corresponding to the category set in one of the second display mode and the third display mode and to display the generated UI image on the display part (10).

10. An information display method of a video processing apparatus, comprising:
receiving (S10) a plurality of pieces of auxiliary information including category information;
generating (S20) user interface (UI) images corresponding to the plurality of pieces of auxiliary information;
extracting (S30) the category information from the plurality of pieces of auxiliary information;
determining (S40) whether the extracted category corresponds to a preset category; and
if it is determined that the extracted category corresponds to the preset category, displaying (S50) a video including the UI image corresponding to auxiliary information of the corresponding category.

11. The information display method according to claim 10, further comprising receiving one of the plurality of pieces of auxiliary information through the UI image corresponding to the auxiliary information of the corresponding category, wherein the received auxiliary information is processed and the UI image corresponding to the received auxiliary information is displayed.

12. The information display method according to claim 11, wherein the generating the UI images comprises further generating UI images corresponding to a first display mode in which the UI images corresponding to the plurality of pieces of auxiliary information are displayed and a second display mode in which a UI image corresponding to the auxiliary information of the corresponding category is displayed, and
wherein the displaying the video including the UI image corresponding to the auxiliary information of the corresponding category comprises receiving one of the display modes through the UI images corresponding to the display modes and displaying the UI images corresponding to the auxiliary information according to the received one of the display modes.

13. The information display method according to claim 12, wherein the generating the UI images comprises further generating a UI image corresponding to a third display mode in which the UI image corresponding to auxiliary information corresponding to the most frequent category selected by a user among the plurality of pieces of auxiliary information, is displayed.

14. The information display method according to claim 13, wherein the displaying the video including the UI image corresponding to the auxiliary information of the corresponding category comprises checking whether the display mode in which the UI images are displayed is one of the second display mode and the third display mode,
the information display method further comprising: if it is checked that the display mode is one of the second display mode and the third display mode, generating and displaying a UI image corresponding to a list of channels including auxiliary information corresponding to the category set in one of the second display mode and the third display mode.
